# EUROPEAN PATENT APPLICATION

(11) **EP 3 671 099 A1**
(43) Date of publication of application: **24.06.2020**
(21) Application number: 18461653.0
(22) Date of filing: 21.12.2018
(51) Int. Cl.: F28F 19/01, B60K 11/04, B60K 11/08, B60R 19/52, B60R 19/54

(54) **A PROTECTION GRID FOR A HEAT EXCHANGER MODULE**

(71) Applicant: Valeo Autosystemy SP. Z.O.O., 32-050 Skawina (PL)
(72) Inventor: BARUS, Lukasz, 32-050 Skawina (PL); CICHOSZ, Filip, 32-050 Skawina (PL); JURKIEWICZ, Damian, 32-050 Skawina (PL); GODZINA, Radoslaw, 32-050 Skawina (PL); SZOSTEK, Dawid, 32-050 Skawina (PL)
(74) Representative: Bialkowski, Adam

(57) **Abstract**

The protection system includes an air inlet duct and at least one protection grid. The air inlet duct is mounted over and covers at least a portion of at least one heat exchanger core. The air inlet duct is configured with at least one opening. The at least one protection grid includes a mesh and a frame. The frame is configured along at least a portion of a periphery of the mesh and engages with at least a portion of a periphery of the at least one opening to define a deployed configuration of the at least one protection grid over the at least one opening in which the mesh covers at least a portion of the at least one opening.

## Description

The present disclosure relates to a heat exchanger module for a vehicle. Particularly, the present disclosure relates to a protection grid system for a heat exchanger module.

A vehicle includes several heat exchanger elements. For example, a conventional engine cooling system of a vehicle includes a heat exchanger in form of a radiator to facilitate cooling of an engine of the vehicle. Specifically, a coolant in form of glycol or water-glycol mixture is passed through the engine, from where the coolant absorbs heat and becomes hot. The hot coolant is then fed into an inlet tank of the radiator that is located preferably on top of the radiator, or along one side of the radiator, from the inlet tank the hot coolant is distributed across a radiator core through radiator tubes to another tank on an opposite end of the radiator. As the hot coolant passes through the radiator tubes to the opposite tank, the coolant transfers heat to tubes of the radiator core, which in turn, transfers the heat to fins that are lodged between adjacent rows of radiator tubes. The fins then release the heat to the ambient air that flows across the radiator core. For effective and efficient performance of the radiator, there should be unhindered supply of ambient air to the radiator core. In order to save the power consumption in the vehicle, natural draft of air across the radiator core is utilized. For achieving natural draft of air across the radiator core, the radiator core is disposed behind a front grill of the vehicle, wherein the front grill is disposed between a front hood and a front bumper of the vehicle such that the ram air impinges on the front grille of the vehicle as the vehicle moves ahead in forward direction. Such strategic placement of the radiator core enables the ram air to impinge on and pass through the radiator core, thereby creating natural draft of air across the radiator core as the vehicle moves ahead in the forward direction. The engine cooling system often incorporates one or more fan elements disposed preferably behind the radiator core to generate a forced draft of air that facilities passage of air through the radiator core. The forced draft generated by the fan elements improves the performance and efficiency of the radiator by improving the air flow rate through the radiator by increasing the air speed. The radiator may be disposed either alone or in series with other heat exchange elements such as for example, a condenser and a chiller that also requires draft of air and uniform distribution of the air there through for efficient operation thereof. Also, the sequence in which the radiator, condenser and chillers are disposed may vary and the position of the radiator and the condenser can interchange, for example, the radiator can be disposed at the front to first receive the ram air and alternatively the condenser can be disposed at the front to first receive the ram air.

However, when the vehicle is travelling in off-road conditions or over a rough terrain, heavier articles such as stones, gravel, and the likes may approach the vehicle, cross the front grill and strike a front face of the heat exchanger core, such as for example, radiator core or condenser core. As a result, the heavier article may cause damage to, particularly, may cause cracks in the heat exchange tubes carrying heat exchange fluid there through. The cracks may cause leakage of the tubes. The continuous leakage of the heat exchange fluid from the heat exchange tubes may result in problems such as pressure loss inside the heat exchanger tubes, heat exchanger tank requiring frequent refilling and inefficient operation of the heat exchanger due to insufficient heat exchange fluid. Conditions such as dropping of heat exchange fluid levels in the heat exchanger, for example radiator below critical level may render the radiator inefficient, thereby resulting in engine seizure due to excessive heat. The cracks may also act as points of stress concentration, thereby may cause mechanical failure. In case the heavier articles strike the delicate fin elements disposed between adjacent tubular elements, the fin elements may get damaged and not function as per design, thereby deteriorating efficiency and performance of the heat exchanger, Also, the high speed ram air often carries therewith lighter articles such as paper, empty polythene bags, leaves and the likes, that may reach the front face of the heat exchanger core and may get struck over there due to draft of air created by the at least one fan element or the ram air. Most often, these lighter articles accumulate in the space behind the front grille and in front of the heat exchanger core, thereby causing hindrance to air flow and preventing ram air from reaching and entering the heat exchanger core, thereby deteriorating efficiency and performance of the heat exchanger. Also, depending upon the configuration of the housing receiving the heat exchanger core, the heat exchanger core may be either disposed orthogonally or at an inclination with respect to direction of the ram air.

Accordingly, there is a need for a protection system that protects the heat exchanger core such as radiator and/or condenser core. Further, there is a need for a protection system that acts as a barrier in front of the radiator or condenser core and prevents heavier articles such as stones from impacting and damaging the radiator and/or condenser core, while still not compromising air flow through the radiator or condenser core. Also, there is a need for a protection system that prevents lighter articles such as paper, polythene bags and leaves from getting in to path of ram air approaching the radiator or condenser core and deteriorating efficiency and performance of the radiator or condenser respectively, while still not compromising air flow through the radiator or condenser core.

An object of the present invention is to provide a protection system that prevents heavier articles such as stones and gravel and lighter articles such as paper, polythene bags and leaves from reaching a heat exchanger core while still allowing the air to reach the heat exchanger core.

An object of the present invention is to provide a protection system that protects a heat exchanger core against damage from impacts of heavier articles such as stones and gravel, while still not compromising air flow through the heat exchanger core.

Another object of the present invention is to provide a protection system that prevents lighter articles such as paper, polythene bags and leaves from getting in to path of ram air approaching a heat exchanger core, while still not compromising air flow through the heat exchanger core.

Still another object of the present invention is to provide a protection system that can be easily retrofitted over current heat exchangers without requiring many modifications.

Yet another object of the present invention is to provide a protection system that enhances service life of a heat exchanger and reduces maintenance thereof.

Another object of the present invention is to provide a protection system that is inexpensive and also convenient to manufacture, assemble and use.

In the present description, some elements or parameters may be indexed, such as a first element and a second element. In this case, unless stated otherwise, this indexation is only meant to differentiate and name elements which are similar but not identical. No idea of priority should be inferred from such indexation, as these terms may be switched without betraying the invention. Additionally, this indexation does not imply any order in mounting or use of the elements of the invention.

In accordance with an embodiment of the invention a protection system is disclosed. The protection system includes an air inlet duct and at least one protection grid. The air inlet duct is mounted over and covers at least a portion of at least one heat exchanger core. The air inlet duct is configured with at least one opening. The at least one protection grid includes a mesh and a frame. The frame is configured along at least a portion of a periphery of the mesh and engages with at least a portion of a periphery of the at least one opening to define a deployed configuration of the at least one protection grid over the at least one opening in which the mesh covers at least a portion of the at least one opening.

Generally, the air inlet duct includes at least one first engagement element configured on at least one side of the opening and at least one second engagement element configured on at least one opposite side of the opening, such that the at least one first engagement element and the at least one second engagement element engage with corresponding opposite portions of the frame to define the deployed configuration of the at least one protection grid over the opening.

Alternatively, the frame includes at least one first engagement element configured on at least one side of the frame and at least one second engagement element configured on at least one opposite side of the frame, such that the at least one first engagement element and the at least one second engagement element engages with corresponding opposite portions of the collar configured around said opening to define the deployed configuration of the at least one protection grid over the opening.

Preferably the at least one first engagement element is a flexible clip and the at least one second engagement element is a rigid bumper.

Generally, the mesh is configured of metal by either one of extrusion and stamping.

Typically, the mesh includes an array of elements that define restricted air passages.

In accordance with an embodiment, the mesh is formed of woven wires.

Generally, the elements are horizontally and vertically disposed beams that cross each other to configure the restricted air passages.

Alternatively, the elements are honeycomb structures that configure the restricted air passages.

Specifically, the frame is configured of either one of metal rod and metal angle.

Generally, the frame is joined along the periphery of the mesh by either one of welding and brazing process.

Typically, the at least one protection grid is received in at least one socket configured around the collar configured around the opening of the air inlet duct.

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures, wherein:
**FIGURE 1** illustrates a schematic representation of a protection system in accordance with an embodiment of the present invention, wherein at least one protection grid of the protection system is mounted in spaced apart configuration and at an inclination relative to a heat exchanger core received inside an air inlet duct of a heat exchanger module;
**FIGURE 2** illustrates an isometric view of the protection system of **FIGURE 1** dis-assembled from the heat exchanger module of **FIGURE 1**;
**FIGURE 3** illustrates an isometric view of the protection system of **FIGURE 2** without the at least one protection grid;
**FIGURE 4** illustrates another isometric view of the protection system of **FIGURE 2****;**
**FIGURE 5** illustrates an isometric view of the at least one protection grid of the protection system depicted in **FIGURE 2** and **FIGURE 4**, also is depicted an enlarged view of the at least one protection grid;
**FIGURE 6** illustrates an isometric view of the protection system depicted in **FIGURE 2** and **FIGURE 4**, also is depicted enlarged view of at least one first engagement element, particularly, an flexible clip configured on at least one side of an opening or a lip configured around the opening formed on the air inlet duct and at least one second engagement element, particularly, a rigid bumper configured on at least one opposite side of the opening or the lip configured around the opening in accordance with an embodiment of the present invention;
**FIGURE 7a** illustrates a front view of the at least one protection grid of **FIGURE 5** mounted on the opening or the lip configured around the opening; and
**FIGURE 7b** illustrates a sectional view of the at least one protection grid of **FIGURE 7a** along section line A-A and interaction between the frame and the flexible clip and the rigid bumper respectively.

It must be noted that the figures disclose the invention in a detailed enough way to be implemented, said figures helping to better define the invention if needs be. The invention should however not be limited to the embodiment disclosed in the description.

The present invention envisages a heat exchanger module configured with a protection system that includes at least one protection grid mounted in a spaced apart configuration and at an inclination with respect to at least one heat exchanger core, such as for example, a radiator core and/or condenser core. The protection system protects the heat exchanger_core against damage from impacts of heavier articles such as stones and gravel, while still not compromising air flow through the heat exchanger core. Also, the protection system prevents lighter articles such as paper, polythene bags and leaves from getting in to path of ram air approaching a heat exchanger core, while still not compromising air flow through the heat exchanger core. Although, the protection system of the present invention is used in heat exchangers, such as radiators, condensers and evaporators that are used in vehicles, however, the protection system of the present invention is also applicable to any other heat exchangers used in non-vehicular systems such as generators and that also involve air draft for achieving better performance of the heat exchanger.

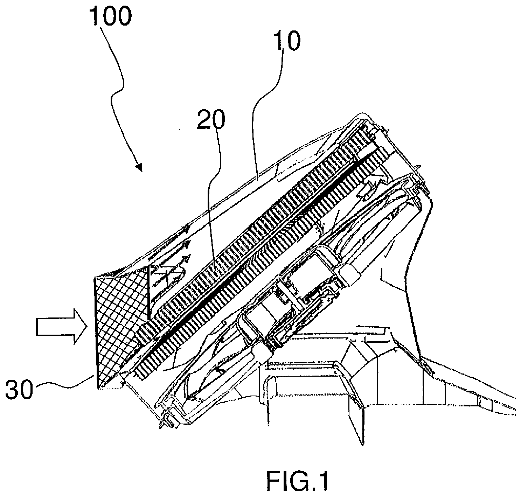

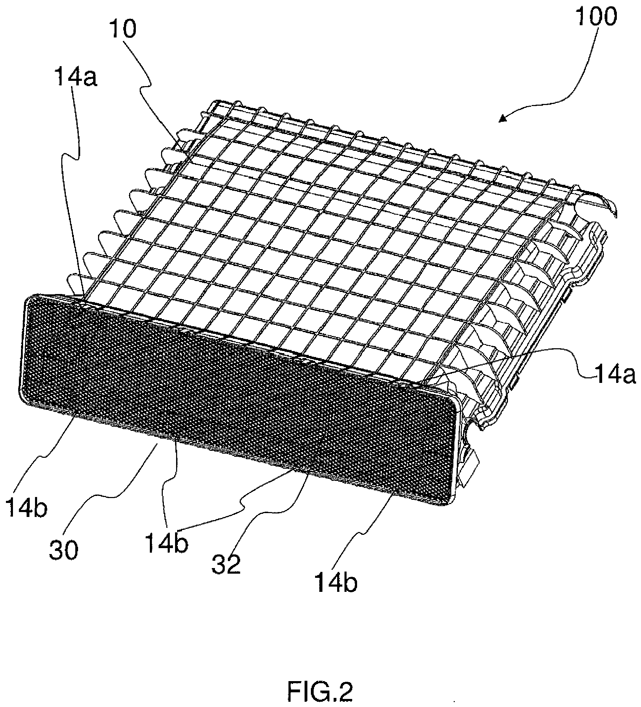

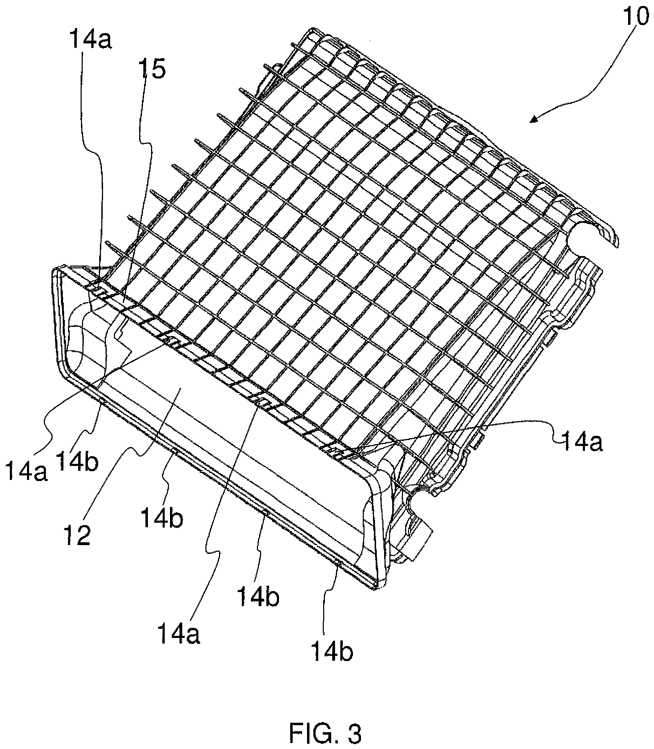

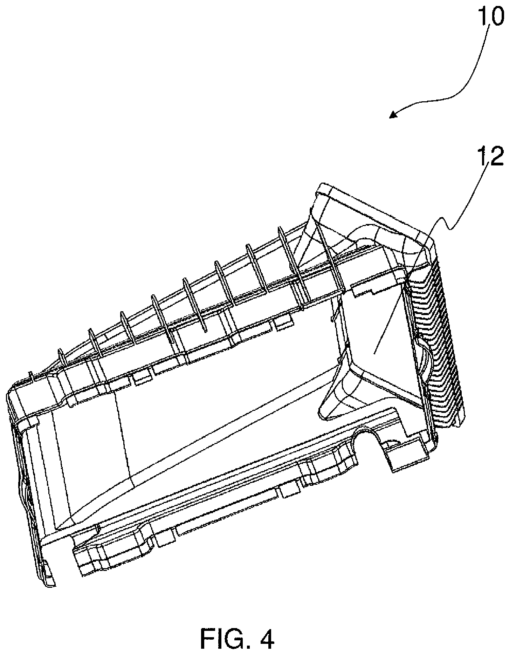

Referring to **FIGURE 1** of the accompanying drawings, a protection system **100** configured on a heat exchanger module is illustrated. The protection system **100** includes an air inlet duct **10** and at least one protection grid **30**. The air inlet duct **10** is mounted over and covers at least a portion of at least one heat exchanger core **20.** The air inlet duct **10** is configured with at least one opening **12.** The at least one protection grid **30** of the protection system **100** is mounted in spaced apart configuration and at an inclination relative to the at least one heat exchanger core **20.** The at least one protection grid **30** includes a mesh **32** and a frame **34.** The frame **34** is configured along at least a portion of a periphery of the mesh **32** and engages with at least a portion of a periphery of the at least one opening **12** to define a deployed configuration of the at least one protection grid **30** over the at least one opening **12** in which the mesh **32** covers at least a portion of the at least one opening **12.** **FIGURE 2** illustrates an isometric view of the protection system **100** dis-assembled from the heat exchanger module. **FIGURE 3** illustrates an isometric view of the protection system **100** without the at least one protection grid **30.** **FIGURE 4** illustrates another isometric view of the protection system **100.**

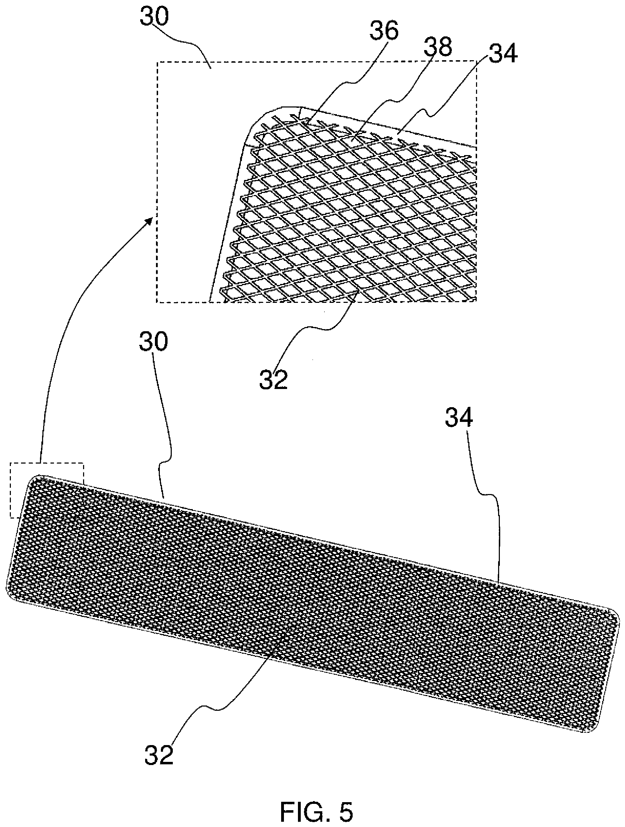

**FIGURE 5** illustrates an isometric view of the at least one protection grid **30** of the protection system **100**, also is depicted an enlarged view of the at least one protection grid **30.** The mesh **32** configuring the at least one protection grid **30** includes an array of elements that define restricted air passages that allow air flow there through but prevents passage of heavier articles such as stones and gravel and lighter articles such as paper, polythene bags and leaves there through. For example, the elements configuring the mesh **32** are horizontally and vertically disposed beams that cross each other to configure the restricted air passages. Otherwise, the elements configuring the mesh **32** are arranged in criss cross manner to configure the restricted air passages. Else, the elements configuring the mesh **32** are honeycomb structures that configure the restricted air passages. In accordance with an embodiment, the mesh **32** is configured of metal by either one of extrusion and stamping process. In some cases, the mesh **32** is formed of woven wires. The frame **34** forming the at least one protection grid **30** is configured of either one of metal rod and metal angle. The frame **34** is joined along the periphery of the mesh **32** by either one of welding and brazing process. However, the protection system **100** of the present invention is not limited to any particular configuration of the mesh **32** and the frame **34**, method of joining the frame **34** to the mesh **32** and the material of the mesh **32** and the frame **34** as far as the protection system **100** is capable of withstanding the impact of the heavier articles and prevent the heavier articles from damaging the heat exchanger core **20** and also prevent the lighter articles from reaching the heat exchanger core **20** and blocking the air flow through the heat exchanger core **20**.

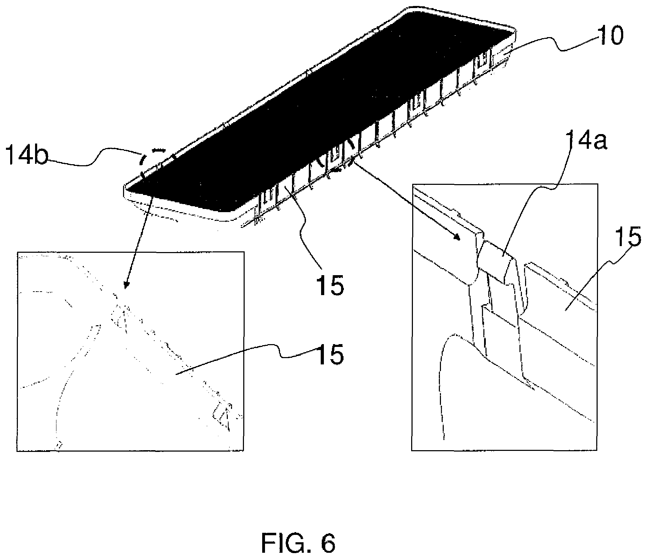

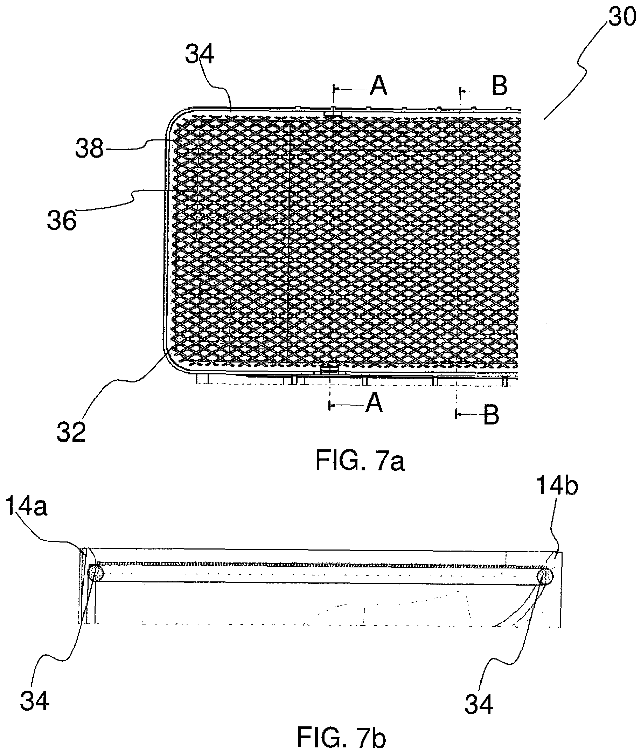

The secure mounting of the at least one protection grid **30** over the at least one opening **12** is achieved by means of at least one first engagement element **14a** and at least one second engagement element **14b.** More specifically, in accordance with an embodiment of the present invention as illustrated in **FIGURE 6****,** the air inlet duct **10** includes the at least one first engagement element **14a** configured on at least one side of the at least one opening **12** or a lip or a collar portion **15** configured on one side of the at least one opening **12** and the at least one second engagement element **14b** configured on at least one opposite side of the at least one opening **12** or the lip or the collar portion **15** configured at the opposite side of the at least one opening **12**, such that the at least one first engagement element **14a** engages with at least a first portion of the frame **34** and the at least one second engagement element **14b** engages with at least second portion of the frame **34** that is disposed on the opposite side to the first portion of the frame **34** to define the deployed configuration of the at least one protection grid **30** over the at least one opening **12.** More specifically, **FIGURE 7a** illustrates a front view of the at least one protection grid **30** mounted on the at least one opening **12** or the lip or the collar **15** configured around the at least one opening **12** and the **FIGURE 7b** illustrates engagement between one side of the frame **34** and the at least one first engagement element **14a** in the form of the flexible clip configured on at least one side of the opening or the lip or the collar portion **15** configured on one side of the at least one opening **12** and the engagement between the other side of the frame **34** and the at least one second engagement element **14b** in the form of rigid bumper configured on the opposite side of the at least one opening **12**. With such configuration, the at least one protection grid **30** can be securely and convenient mounted on the at least one opening **12** or the lip or the collar **15** configured around the at least one opening **12** without even requiring any engagement elements configured on the protection grid **30**, thereby simplifying the configuration of the protection grid **30**.

Alternatively, the frame **34** includes the at least one first engagement element **14a** configured on at least one side of the frame **34** and the at least one second engagement element **14b** configured on at least one opposite side of the frame **34**, such that the at least one first engagement element **14a** and the at least one second engagement element **14b** engages with the at least one opening **12** or at least a portion of the collar or the lip **15** configured on opposite sides of the at least one opening **12** to define the deployed configuration of the at least one protection grid **30** over the at least one opening **12**. With such configuration, the protection grid **30** can be securely and convenient mounted on the at least one opening **12** or the lip or the collar **15** configured around the at least one opening **12** without even requiring any engagement elements configured on the at least one opening **12** or the lip or the collar **15** configured around the at least one opening **12** of the air inlet duct **10**, thereby simplifying the configuration of the at least one opening **12** or the lip or the collar **15** configured around the at least one opening **12** of the air inlet duct **10**. In accordance with another embodiment of the present invention, the at least one protection grid **30** is received in at least one socket configured around the collar configured around the opening **12** of the air inlet duct **10**. However, the present invention is not limited to any particular configuration of the engagement elements **14a** and **14b**, placement of the engagement elements **14a** and **14b**, as far as the engagement elements are capable of achieving a secure and reliable mounting of the at least one protection grid **30** over the at least one opening **12** or the collar or the lip **15** configured around the at least one opening **12**.

Several modifications and improvement might be applied by the person skilled in the art to the protection system 100 as defined above, as long as it comprises an air inlet duct and at least one protection grid. The air inlet duct is mounted over and covers at least a portion of at least one heat exchanger core. The air inlet duct is configured with at least one opening. The at least one protection grid includes a mesh and a frame. The frame is configured along at least a portion of a periphery of the mesh and engages with at least a portion of a periphery of the at least one opening to define a deployed configuration of the at least one protection grid over the at least one opening in which the mesh covers at least a portion of the at least one opening.

In any case, the invention cannot and should not be limited to the embodiments specifically described in this document, as other embodiments might exist. The invention shall spread to any equivalent means and any technically operating combination of means.

## Claims

1. A protection system (100) comprising:
• an air inlet duct (10) adapted to be mounted over and cover at least a portion of at least one heat exchanger core (20), said air inlet duct (10) is configured with at least one opening (12) ;
• at least one protection grid (30) comprising:
∘ a mesh (32); and
∘ a frame (34) configured along at least a portion of a periphery of said mesh (32) and adapted to engage with at least a portion of a periphery of said at least one opening (12) to define a deployed configuration of said at least one protection grid (30) over said at least one opening (12) in which said mesh (32) covers at least a portion of said at least one opening (12).

2. The protection system (100) as claimed in the previous claim, wherein said air inlet duct (10) comprises at least one first engagement element (14a) configured on at least one side of said opening (12) and at least one second engagement element (14b) configured on at least one opposite side of said opening (12), such that said at least one first engagement element (14a) and said at least one second engagement element (14b) engage with corresponding opposite portions of said frame (34) to define said deployed configuration of said at least one protection grid (30) over said opening (12).

3. The protection system (100) as claimed in the previous claim 1 or claim 2, wherein said frame (34) comprises at least one first engagement element (14a) configured on at least one side of said frame (34) and at least one second engagement element (14b) configured on at least one opposite side of said frame (34), such that said at least one first engagement element (14a) and said at least one second engagement element (14b) engage with corresponding opposite portions of said opening (12) to define said deployed configuration of said at least one protection grid (30) over said opening (12).

4. The protection system (100) as claimed in the claim 2 or claim 3, wherein said at least one first engagement element (14a) is a flexible clip and said at least one second engagement element (14b) is a rigid bumper.

5. The protection system (100) as claimed in any of the preceding claims, wherein said mesh (32) is configured of metal by either one of extrusion and stamping.

6. The protection system (100) as claimed in any of the preceding claims, wherein said mesh (32) comprises an array of elements (36) adapted to define restricted air passages (38).

7. The protection system (100) as claimed in the preceding claim, wherein said elements (36) are horizontally and vertically disposed beams that cross each other to configure said restricted air passages (38).

8. The protection system (100) as claimed in claims 1 to 6, wherein said elements (36) are honeycomb structures adapted to configure said restricted air passages (38).

9. The protection system (100) as claimed in any of the preceding claims, wherein said mesh (22) is formed of woven wires.

10. The protection system (100) as claimed in any of the preceding claims 1 to 8, wherein said frame (34) is configured of either one of metal rod and metal angle.

11. The protection system (100) as claimed in the preceding claim, wherein said frame (34) is joined along the periphery of said mesh (32) by either one of welding and brazing process.

12. The protection system (100) as claimed in any of the preceding claims, wherein said at least one protection grid (30) is received in at least one socket configured around said opening (12) of said air inlet duct (10).
